# EUROPEAN PATENT SPECIFICATION

(11) **EP 0 595 471 B1**
(45) Date of publication and mention of the grant of the patent: **05.06.1996**
(21) Application number: 93307692.9
(22) Date of filing: 28.09.1993
(51) Int. Cl.: C09C 3/06, C09C 3/08, C09C 3/10, C09C 3/12, C09C 1/36

(54) **Process for coating inorganic particles**
Verfahren zur Beschichtung von anorganischen Teilchen
Procédé de revêtement de particules inorganiques

(30) Priority: 24.10.1992 GB 9222434
(43) Date of publication of application: 04.05.1994
(73) Proprietor: TIOXIDE GROUP SERVICES LIMITED, London W14 0QL (GB)
(72) Inventor: Metcalf, Alison Lesley, Winston, Darlington, DL2 3QP (GB); Williamson, Martin Alec, Wingate, TS28 5DP (GB)
(74) Representative: Jackson, John Derek

(56) References cited:
- EP-A- 0 078 632
- EP-A- 0 505 022

## Description

This invention relates to a process for coating inorganic particles and in particular to a process for producing inorganic particles having a coating of dense amorphous silica.

Inorganic particles having a coating of silica in the form known as dense amorphous silica are well known. US Patent 2 885 366 describes the preparation of dense amorphous silica coatings on various substrates. However, it is also known that formation of a dense amorphous silica coating which is continuous and impervious can be very time consuming and therefore uneconomical.

Improved methods of preparing dense amorphous silica coatings have been proposed and it is generally known that producing a coating at a relatively high temperature of, say, 90°C enables a satisfactory coating to be produced reasonably quickly. However, the use of a high temperature together with the alkaline solutions used to prepare dense amorphous silica coatings means that expensive, heat-and corrosion-resistant reaction vessels are needed.

It is an object of the present invention to provide a process for preparing satisfactory coatings of dense amorphous silica on inorganic particles at a moderate temperature and at an acceptable rate.

According to the invention a process for coating inorganic particles comprises forming an aqueous suspension of the particles and depositing a coating of dense amorphous silica on said particles by the addition of an acid to a solution of a silicate at a pH of 8 to 11, the pH of the suspension being maintained in the range 8 to 11 throughout the addition, wherein the suspension of particles is subjected to the effects of ultrasonic vibrations during at least a part of the deposition of the coating of dense amorphous silica.

It has been shown that the use of ultrasonic vibrations during deposition of the coatings enables the production of dense amorphous silica coatings at a temperature of about 60°C having similar properties and appearance to coatings produced in a similar time at about 90°C but without the use of ultrasound.

The process of the invention can be applied to any inorganic particles upon which it is desired to deposit a coating of dense amorphous silica. It is particularly useful for coating inorganic pigments and especially particulate titanium dioxide, the coated titanium dioxide so produced being useful as a very durable white pigment. Preferably titanium dioxide used in the process of the invention has the rutile crystal form.

When titanium dioxide is used in the process of the invention it may be uncoated titanium dioxide or titanium dioxide the particles of which are coated with an inorganic coating such as an oxide or hydrous oxide. For example, the particle can be coated with an oxide or hydrous oxide of zirconium, titanium, aluminium, silicon, calcium or magnesium before being coated with dense amorphous silica using the process of this invention.

The particles of titanium dioxide may also be provided with coatings external to the coating of dense amorphous silica. These coatings may be inorganic coatings such as oxides or hydrous oxides of silicon, titanium, zirconium, aluminium, calcium or magnesium or organic coatings of compounds such as polyols, alkanolamines, acids or organic silicon compounds. The inorganic and organic coatings of particular use are well known in the pigment art to assist in improving properties such as dispersability and durability of the coated particles.

The size of the inorganic particles used in the process of the invention can vary quite widely. However, the process is particularly suited to coating pigmentary titanium dioxide which has an average crystal size preferably in the range 0.15 to 0.40 micrometre and most preferably in the range 0.20 to 0.30 micrometre.

The suspension of particles is formed in any convenient manner, for example by stirring with water or subjecting a mixture of water and inorganic particles to the effects of ultrasound. If desired, a dispersing agent can be added to improve the degree of dispersion of the particles. Suitable dispersing agents include inorganic compounds such as alkali metal phosphates and alkali metal silicates or organic compounds such as alkanolamines. Specific dispersing agents include sodium silicate, sodium hexametaphosphate and monoisopropanolamine. When alkali metal silicates are employed they will eventually be converted to silica as part of the dense amorphous silica coating on the particles. Allowance must therefore be made for this when the quantity required for forming the desired coating is calculated.

If necessary, the degree of dispersion of the particles can also be improved by milling the suspension.

The concentration of particles in the suspension can vary quite widely and will depend upon the nature and size of the particles. For pigmentary titanium dioxide the concentration is preferably between 150 and 650 grams per litre and most preferably between 200 and 400 grams per litre.

The coating of dense amorphous silica is formed on the particles by acidification of an alkaline solution of a silicate and surface precipitation of hydrous amorphous silica. Suitable silicates include the silicates of alkali metals such as sodium silicate and potassium silicate.

Throughout the deposition of the coating of dense amorphous silica on the particles the pH of the suspension is maintained at a pH of 8 to 11, preferably at a pH of from 9 to 10.

The silicate can be present as a mixture with the suspension of inorganic particles to which the acid is added at such a rate that the pH remains within the specified range or, alternatively, an alkaline solution of silicate and, simultaneously, an acid are added to the suspension at a rate which maintains the specified pH value for the suspension.

Generally, the acid used is a mineral acid such as sulphuric acid. During addition of the acid the temperature of the suspension is usually maintained in the range 60°C to 100°C in order to achieve an economical rate for the deposition of a satisfactorily impervious coating of dense amorphous silica. The use of ultrasonic vibrations according to the process of the invention enables satisfactory coatings to be produced at lower temperatures and preferably, therefore, the suspension is maintained at a temperature between 60°C and 80°C. Usually the use of ultrasound above 80°C will have little advantage since satisfactory coatings are formed relatively quickly at this temperature without the need to employ ultrasound.

In the process of the present invention at least a part of the deposition of a dense amorphous silica coating is effected whilst subjecting the suspension to the effect of ultrasonic vibrations. This can be achieved by, for example, generating ultrasonic vibrations outside the vessel in which the deposition takes place or, preferably, by immersing an ultrasonic vibrator in the suspension. Preferably, the suspension is treated with the vibrations from the commencement of the deposition and the treatment is continued throughout the deposition.

The ultrasonic vibrations of most use are those known as power ultrasound, usually employing frequencies in the range 20 to 100 kHz. The actual power delivered to the suspension depends upon the nature of the suspension and the volume being treated. Preferably, the power output to the suspension is within the range 50 to 3000 watts.

The ultrasonic vibrations tend to maintain the particles of the suspension in a state of dispersion but, where necessary, the suspension is also stirred during deposition.

The amount of dense amorphous silica deposited will depend upon the nature and intended use for the inorganic particles. Typically, for pigrnentary titanium dioxide the amount of dense amorphous silica is up to 12% by weight expressed as SiO₂ with respect to TiO₂ and usually is at least 2% by weight. Preferably, the amount is between 3% and 8% by weight.

When deposition of dense amorphous silica is complete it is advantageous to maintain the stirred suspension at a pH of 8 to 11 for a period to ensure complete precipitation of the silica coating. Typically the dispersion is held at a pH value of 9 for a period of 10 to 60 minutes after the additions of silicate and acid are complete. Preferably, the dispersion is subjected to ultrasonic vibrations during this time.

The particles are further coated, if desired, with inorganic or organic coatings using any suitable technique. For example an inorganic oxide coating can be deposited by adding to the dispersion a hydrolysable salt of, for example, a metal and adjusting the pH of the dispersion to precipitate an oxide. If desired, the dispersion is subjected to the effect of ultrasound vibrations during precipitation of this oxide. After coating is complete the pH of the dispersion is usually adjusted to an approximately neutral pH and the coated particles are, generally, separated by filtration and dried.

Titanium dioxide particles coated according to the process of the invention have been shown to have very uniform and smooth coatings of dense amorphous silica and are particularly suitable as pigments having high durability.

The invention is illustrated by the following examples.

### EXAMPLE 1 (Comparative)

2200g of rutile titanium dioxide reactor discharge obtained from the vapour phase oxidation of titanium tetrachloride in the presence of a small amount of aluminium chloride (1.5% by weight as Al₂O₃ on reactor discharge) was added to a water/sodium hexametaphosphate/NaOH (110 grams per litre) mixture which contained sufficient components to achieve final slurry pH value of 10, a pigment concentration of 700 grams per litre and 0.1% P₂O₅ by weight on reactor discharge . 5140 ml of Ottawa sand was added to the resulting dispersion which was then sandmilled at 2000 rpm for 60 minutes the sand being subsequently removed from the sandmilled slurry with a metal gauge. The sand-free slurry was then filtered to remove any particles greater than 45 micrometres in size.

A portion of the dispersion containing 1000 grams of titanium dioxide was diluted to 350 grams per litre TiO₂ and the temperature raised to 60°C. The pH of the dispersion was adjusted to 9.0 by acid addition.

To the stirred aqueous dispersion there was then added aqueous sodium silicate solution (314 ml) containing the equivalent of 140 grams per litre SiO₂ simultaneously with 10% by volume sulphuric acid (98 ml). The addition was completed over a period of 90 minutes and the pH maintained at the value of 9 during this time. The aqueous dispersion was then stirred for a further 20 minutes while the temperature was maintained at 60°C.

Heating of the stirred aqueous dispersion was then discontinued and a quantity of the sulphuric acid (18 ml) was added to reduce the pH to 7.5 over a period of 20 minutes.

The aqueous dispersion was then cooled to 50°C, filtered to obtain the treated pigment which was then washed, treated with trimethylolpropane (0.4% by weight on uncoated pigment weight) and dried prior to double milling in a fluid energy mill.

The pigment obtained on analysis contained silica in an amount of 3.85% by weight expressed as SiO₂ based on the weight of finished pigment. An electron micrograph of the finished pigment showed that the coating was not well adhered to the titanium dioxide particles and a significant amount of silica was seen to be freely floating amongst the pigment crystals, clearly showing that the titanium dioxide was poorly coated.

### EXAMPLE 2 (Comparative)

An aqueous dispersion containing 1000 grams of rutile titanium dioxide pigment at a concentration of 350 grams per litre was prepared as described in Example 1.

The aqueous dispersion was heated to 90°C but otherwise the experimental procedure in Example 1 was repeated. The treated pigment on analysis contained silica in an amount of 3.90% by weight expressed as SiO₂ based on the weight of finished pigment.

An electron micrograph of the finished pigment showed that the coating was smooth and uniformly deposited around the titanium dioxide particles.

### EXAMPLE 3

The experiment described in Example 1 was repeated except that during the addition of sodium silicate and sulphuric acid and until the pH of the dispersion was reduced to 7 the dispersion was subjected to ultrasound vibrations with a frequency of 20 kHz and a power of 600 watts. The treated pigment obtained on analysis contained silica in an amount of 3.75% by weight SiO₂ on weight of finished pigment.

An electron micrograph of the finished pigment showed that the coating was smooth and uniformly deposited around the TiO₂ particles. It was similar to the coating obtained in Example 2.

### EXAMPLE 4

An aqueous dispersion containing 1000 grams of rutile titanium dioxide pigment at a concentration of 350 grams per litre was prepared as described in Example 1.

The aqueous dispersion was heated to 60°C. The pH of the dispersion was adjusted to 9.0 by acid addition.

The stirred aqueous dispersion was subjected to the effect of ultrasound vibrations with a frequency of 20 kHz and a power of 600 watts and there was then added aqueous sodium silicate solution (314 ml) containing the equivalent of 140 grams per litre SiO₂ simultaneously with 10% by volume sulphuric acid (98 ml). The addition was completed over a period of 90 minutes and the pH maintained at 9.0 during this time. The aqueous dispersion was then stirred for a further 20 minutes. A quantity of sulphuric acid (16 ml) was then added to reduce the pH to 7.0 over a period of 20 minutes and the ultrasound was switched off.

To the stirred aqueous dispersion there was then added an alkaline solution of sodium aluminate containing the equivalent of 81 grams per litre Al₂O₃ and 225 grams per litre NaOH and the pH was monitored. When the pH reached 10 sulphuric acid was added simultaneously so as to maintain this pH whilst the addition of alkaline sodium aluminate was completed. After the addition and stirring for a further 30 minutes the pH was found to be 10.5. The total amount of sodium aluminate solution added was 272 mls in a total time of 15 minutes.

The pH of the stirred aqueous dispersion was then adjusted to 7.0 over a period of 30 minutes by adding a further quantity (65 ml) of the sulphuric acid. Mixing was continued for 30 minutes after adding the acid. The aqueous dispersion was then filtered to obtain the treated pigment which was then washed, treated with trimethylolpropane (0.4% by weight on uncoated pigment weight) and dried prior to double milling in a fluid energy mill.

The pigment obtained on analysis contained silica in an amount of 4.17% by weight expressed as SiO₂ and 3.67% by weight of alumina expressed as Al₂O₃, both based on the weight of finished pigment.

An electron micrograph of the finished pigment showed that the silica coating was smooth and uniformly deposited around the TiO₂ particles.

### EXAMPLE 5

An aqueous dispersion containing 1000 grams of rutile titanium dioxide pigment at a concentration of 350 grams per litre was prepared as described in Example 1. The aqueous dispersion was heated to 60°C and the pH of the dispersion was adjusted to 9.0 by acid addition.

The stirred aqueous dispersion was then subjected to ultrasonic vibrations at a frequency of 20 kHz and a power of 600 watts and there was then added aqueous sodium silicate solution (314 ml) containing the equivalent of 140 grams per litre SiO₂ simultaneously with 10% by volume sulphuric acid (98 ml). The addition was completed over a period of 50 minutes and the pH maintained at 9 during this time. The aqueous dispersion was then stirred for a further 20 minutes after which time the ultrasonic vibrations were switched off.

A quantity of sulphuric acid (18 ml) was then added to reduce the pH to 7.0 over a period of 20 minutes.

The aqueous dispersion was then filtered to obtain the treated pigment which was then washed, treated with trimethylolpropane (0.4% by weight on uncoated pigment weight) and dried prior to double milling in a fluid energy mill.

The pigment obtained on analysis contained silica in an amount of 4.06% by weight expressed as SiO₂ based on the weight of finished pigment.

An electron micrograph of the finished pigment showed that the coating was smooth and uniformly deposited around the TiO₂ particles.

### EXAMPLE 6 (Comparative)

2200g of rutile titanium dioxide reactor discharge obtained from the vapour phase oxidation of titanium tetrachloride in the presence of a small amount of aluminium chloride (1.5% by weight as Al₂O₃ on reactor discharge) was added to a water/sodium hexametaphosphate/sodium hydroxide (110 grams per litre) mixture which contained sufficient components to achieve final slurry pH value of 10, a pigment concentration of 700 grams per litre and 0.1 % P₂O₅ by weight on reactor discharge. The resulting dispersion was sandmilled with 5140 ml of Ottawa sand at 2000 rpm for 60 minutes. The sand was removed from the sandmilled slurry using a metal gauge. The sand-free slurry was then filtered to remove any particles greater than 45 micrometres in size.

A portion of the dispersion containing 1000 grams of pigment was diluted to 350 grams per litre pigment and the temperature raised to 90°C. The pH of the dispersion was adjusted to 9.0 by acid addition.

To the stirred aqueous dispersion, there was then added aqueous sodium silicate solution (314 ml) containing the equivalent of 140 grams per litre SiO₂ over a period of 30 minutes. Stirring was continued for 10 minutes and then 10% by volume sulphuric acid (102 ml) was added over 60 minutes and the pH adjusted and maintained at a valueof 9.0 during this time. The aqueous dispersion was then stirred for a further 10 minutes while the temperature was maintained at 90°C. A quantity of the sulphuric acid (14 ml) was added to reduce the pH to 7.0 over a period of 10 minutes. The stirring was continued for a further 10 minutes after completion of the addition. The dispersion was then cooled to a temperature of 60°C and maintained at 60°C during subsequent coating with alumina.

To the stirred aqueous dispersion there was then added an alkaline solution of sodium aluminate containing the equivalent of 84 grams per litre Al₂O₃ and 222 grams per litre NaOH until the pH reached 10 to 10.5. Addition of the sodium aluminate was continued simultaneously with a further quantity of the sulphuric acid (278 ml) and after stirring for a further 30 minutes the pH was found to be 10.4. The total amount of sodium aluminate added was 262 ml in a total time of 15 minutes.

The pH of the stirred solution was then adjusted to 7.0 over a period of 15 minutes by adding a further quantity (120 ml) of the sulphuric acid. Mixing was continued for 30 minutes after the acid had been added.

The aqueous dispersion was then filtered to obtain the treated pigment which was washed, treated with trimethylol propane (0.4% by weight on uncoated pigment weight) and dried prior to double milling in a fluid energy mill.

The pigment obtained was analysed and found to contain silica and alumina in amounts of 4.16% and 3.60% by weight expressed as SiO₂ and Al₂O₃ based on the weight of finished pigment. Electronmicrographs of pigment sampled after the silica coating but not the alumina coating had been deposited and of the finished pigment show that the coating is smooth and uniformly deposited around the TiO₂ particles.

### EXAMPLE 7 (Comparative)

An aqueous dispersion containing 1000 grams of rutile titanium dioxide pigment at a concentration of 350 grams per litre was prepared as described in Example 6.

The aqueous dispersion was heated to 60°C and the silica coating was precipitated at this temperature. Otherwise, the experimental procedure in Example 6 was repeated.

The treated pigment on analysis was found to contain silica and alumina in amounts of 3.84% and 3.27% by weight expressed as SiO₂ and Al₂O₃ based on the weight of finished pigment. An electronmicrograph of the finished pigment showed that the coating was free floating amongst the pigment crystals, which is characteristic of a poorly coated material.

### EXAMPLE 8

The procedure of Example 7 was repeated except that the dispersion of titanium dioxide was subjected to the effect of ultrasonic vibrations at a frequency of 20 kHz and a power of 600 watts during the deposition of silica. The ultrasound was switched on when the dispersion was initially heated to 60°C and was switched off after the pH of the dispersion was reduced to 7.0 by the addition of 14 ml of sulphuric acid.

The treated pigment on analysis was found to contain silica and alumina in amounts of 3.78% and 3.48% by weight expressed as SiO₂ and Al₂O₃ based on the weight of finished pigment. Electronmicrographs of pigment sampled after the silica coating had been deposited but before the alumina coating was deposited and of the finished pigment show that the coating was smooth and uniformly deposited around the TiO₂ particles.

The three pigments produced in Examples 6, 7 and 8 were tested in a thermosetting acrylic/melamine formaldehyde resin system for optical properties in order to determine if there were any differences in opacity, colour and gloss between the pigments. Results are shown in Table 1.

**TABLE 1**

| **EXAMPLE** | **OPACITY** | | **GLOSS** 60° | **COLOUR** | | |
|---|---|---|---|---|---|---|
| | Y_{B} | % CR | | L | a | b |
| 6 | 88.0 | 92.7 | 72 | 96.7 | -1.2 | 0.3 |
| 7 | 88.5 | 93.1 | 77 | 96.8 | -1.3 | 0.3 |
| 8 | 88.1 | 92.8 | 76 | 96.7 | -1.2 | 0.6 |

The three pigments were also tested to determine the durability of paint incorporating the pigment. The gloss ratio was measured by exposing a sample of thermosetting acrylic/melamine formaldehyde paint in a weatherometer and determining the gloss loss at specified time intervals. A standard pigment known to have a gloss ratio of 0.70 incorporated in a similar paint (standard paint) was similarly exposed and the gloss loss of the standard paint determined at specified time intervals. The gloss loss values of the paints under test at the various specified intervals were plotted against those of the standard paint and the best straight line drawn. The slope of the line (gloss ratio) was then determined. A higher value for this slope indicates a more rapid degradation of the paint.

The standard pigment used in the paint to determine the gloss ratio was selected from commercially available pigments and was one which was considered to have a high durability and acceptable performance in many applications. Two commercially available titanium dioxide pigments were also included in the study. Pigments A and B were pigments made using a "chloride" process, the former being coated with dense silica and classed as superdurable titanium dioxide and the latter being a general purpose alumina coated grade.

Results are shown in Table 2.

**TABLE 2**

| **SAMPLE** | **GLOSS RATIO** |
|---|---|
| Standard | 0.70 |
| Example 6 | 0.64 |
| Example 7 | 0.74 |
| Example 8 | 0.65 |
| Pigment A | 0.68 |
| Pigment B | 0.95 |

### EXAMPLE 9

An aqueous dispersion containing 1000 grams of rutile titanium dioxide pigment at a concentration of 350 grams per litre was prepared as in Example 6.

The stirred aqueous dispersion was heated to 60°C at which temperature it was maintained whilst it was subjected to the effects of ultrasound vibrations at 20 KHz and 600 watts and sodium silicate was added as in Example 6. Then 10% by volume sulphuric acid (95 ml) was added over 30 minutes and the pH adjusted and maintained at a value of 9.0 during this time. After stirring for 10 minutes, the pH of the dispersion was reduced to 7.0 by the addition of 14 ml 10% sulphuric acid over 10 minutes and the ultrasound was switched off. A coating of alumina was then deposited as described in Example 6.

The treated pigment on analysis was found to contain silica and alumina in amounts of 4.02% and 3.48% by weight expressed as SiO₂ and Al₂O₃ based on the weight of finished pigment. An electronmicrograph of the finished pigment showed that the coating was smooth and uniformly deposited around the TiO₂ particles.

### EXAMPLE 10

An aqueous dispersion containing 1000 grams of rutile titanium dioxide pigment at a concentration of 350 grams per litre was prepared as in Example 6.

The procedure described in Example 9 was repeated except that the silica was deposited by the addition of 10% by volume sulphuric acid in an amount of 97 ml over 10 minutes, the pH being adjusted and maintained at a value of 9.0 during this time.

The treated pigment was found on analysis to contain silica and alumina in amounts of 3.98% and 3.34% by weight expressed as SiO₂ and Al₂O₃ based on the weight of finished pigment. An electronmicrograph of the finished pigment showed that the coating was smooth and uniformly deposited around the TiO₂ particles.

Pigments from Examples 8, 9 and 10 were tested in a thermosetting acrylic/melamine formaldehyde resin system for optical properties. Results are shown in Table 3.

**TABLE 3**

| **EXAMPLE** | **OPACITY** | | **GLOSS** 60° | **COLOUR** | | |
|---|---|---|---|---|---|---|
| | Y_{B} | % CR | | L | a | b |
| 8 | 88.1 | 92.8 | 76 | 96.7 | -1.2 | 0.6 |
| 9 | 88.3 | 92.8 | 72 | 96.8 | -1.2 | 0.6 |
| 10 | 88.1 | 92.6 | 76 | 96.8 | -1.2 | 0.3 |

The pigments produced in Examples 8, 9 and 10 were tested, as described previously to determine the durability of paint incorporating the pigment. The results of the measurements are shown in Table 4.

**TABLE 4**

| **SAMPLE** | **GLOSS RATIO** |
|---|---|
| Standard | 0.70 |
| Example 8 | 0.65 |
| Example 9 | 0.65 |
| Example 10 | 0.67 |

### EXAMPLE 11 (Comparative)

An aqueous dispersion containing 1000 grams of rutile titanium dioxide pigment at a concentration of 350 grams per litre was prepared as described in Example 6.

To the stirred aqueous dispersion at a temperature of 90°C, there was then added aqueous sodium silicate solution (314 ml) containing the equivalent of 140 grams per litre SiO₂ over a period of 30 minutes and the dispersion was stirred for 10 minutes after addition was complete. 10% by volume sulphuric acid (97 ml) was then added over 60 minutes and the pH adjusted and maintained at a value of 9.0 during this time. The aqueous dispersion was then stirred for a further 10 minutes while the temperature was maintained at 90°C. A quantity of 10% sulphuric acid (12 ml) was added to reduce the pH to 7.0 over a period of 10 minutes. The stirring was continued for a further 10 minutes after completion of the addition and the temperature was reduced to 60°C at which temperature it was maintained during subsequent coating operations. An aqueous solution of zirconium orthosulphate containing the equivalent of 100 grams per litre ZrO₂ was added to reduce the pH to a value of 1.5 over a period of 15 minutes. The stirring was continued for a further 10 minutes after completion of the addition. To the stirred aqueous dispersion there was then added an alkaline solution of sodium aluminate containing the equivalent of 80 grams per litre Al₂O₃ and 222 grams per litre NaOH until the pH reached 10 to 10.5. Addition of the sodium aluminate was continued simultaneously with a further quantity of the sulphuric acid (228 ml) whilst a pH of 10 to 10.5 was maintained. After the addition and stirring for a further 30 minutes the pH was found to be 10.3. The total amount of sodium aluminate added was 275 ml in a total time of 15 minutes.

The pH of the stirred solution was then adjusted to 7.0 over a period of 15 minutes by adding a further quantity (84 ml) of 10% sulphuric acid. Mixing was continued for 30 minutes after the acid addition was complete.

The aqueous dispersion was then filtered to obtain the treated pigment which was washed, treated with trimethylol propane (0.4% by weight on uncoated pigment weight) and dried prior to double milling in a fluid energy mill.

The pigment obtained was found on analysis to contain silica, alumina and zirconia in amounts of 3.80%, 3.37% and 0.82% by weight respectively expressed as SiO₂, Al₂O₃ and ZrO₂ based on the weight of finished pigment.

### EXAMPLE 12

The experiment described in Example 11 was repeated except that the silica coating was precipitated at 60°C in the presence of ultrasound (20 kHz, 600 watts). The ultrasound was switched on when the dispersion was initially heated to 60°C and switched off when the pH of the dispersion had been reduced to 7.0 by the addition of 12 ml 10% sulphuric acid.

The pigment obtained was found on analysis to contain silica, alumina and zirconia in amounts of 3.79%, 3.51% and 0.89% by weight respectively expressed as SiO₂, Al₂O₃ and ZrO₂ based on the weight of finished pigment.

Pigments from Examples 11 and 12 were tested in a thermosetting acrylic/melamine formaldehyde resin system for optical properties. Results are shown in Table 5.

**TABLE 5**

| **EXAMPLE** | **OPACITY** | | **GLOSS** 60° | **COLOUR** | | |
|---|---|---|---|---|---|---|
| | Y_{B} | % CR | | L | a | b |
| 11 | 88.4 | 92.6 | 77 | 96.9 | -1.3 | 0.7 |
| 12 | 88.2 | 93.1 | 72 | 96.8 | -1.3 | 0.5 |

The pigments produced in Examples 11 and 12 were tested, as described previously to determine the durability of paint incorporating the pigments. The results are shown in Table 6.

**TABLE 6**

| **SAMPLE** | **GLOSS RATIO** |
|---|---|
| Standard | 0.70 |
| Example 11 | 0.71 |
| Example 12 | 0.66 |

## Claims

1. A process for coating inorganic particles comprising forming an aqueous suspension of the particles and depositing a coating of dense amorphous silica on said particles by the addition of an acid to a solution of a silicate at a pH of 8 to 11, the pH of the suspension being maintained in the range 8 to 11 throughout the addition, characterised in that the suspension of particles is subjected to the effects of ultrasonic vibrations during at least a part of the deposition of the coating of dense amorphous silica.

2. A process according to claim 1 characterised in that the inorganic particles are particles of titanium dioxide pigment.

3. A process according to claim 2 characterised in that the particles of titanium dioxide are coated with an inorganic oxide or hydrous oxide.

4. A process according to claim 2 or 3 characterised in that the titanium dioxide has an average crystal size in the range 0.15 to 0.40 micrometre.

5. A process according to any one of the preceding claims characterised in that the silicate is a silicate of an alkali metal.

6. A process according to any one of the preceding claims characterised in that the suspension of inorganic particles is formed by subjecting a mixture of water and inorganic particles to the effects of ultrasound.

7. A process according to any one of the preceding claims characterised in that a dispersing agent is added to the suspension of inorganic particles.

8. A process according to any one of the preceding claims characterised in that the inorganic particles are particles of pigmentary titanium dioxide and the particles are present in the suspension in a concentration between 150 and 650 grams per litre.

9. A process according to any one of the preceding claims characterised in that the acid and the solution of a silicate are simultaneously added to the suspension of inorganic particles.

10. A process according to any one of the preceding claims characterised in that the suspension is maintained at a temperature in the range 60°C to 80°C during the addition of the acid to the solution of a silicate.

11. A process according to any one of the preceding claims characterised in that the ultrasonic vibrations have a frequency in the range 20 kHz to 100 kHz.

12. A process according to any one of the preceding claims characterised in that the ultrasonic vibrations have a power output to the suspension in the range 50 to 3000 watts.

13. A process according to any one of the preceding claims characterised in that the inorganic particles are particles of titanium dioxide and dense amorphous silica is deposited on the particles in an amount up to 12 per cent by weight expressed as SiO₂ with respect to TiO₂.

14. A process according to any one of the preceding claims characterised in that the suspension of inorganic particles is stirred at a pH of 8 to 11 for a period of time after the addition of acid to solution of a silicate is complete.

15. A process according to any one of the preceding claims characterised in that the inorganic particles are further coated with a coating external to the dense amorphous silica coating.

16. A process according to claim 15 characterised in that the particles are further coated with an oxide or hydrous oxide of silicon, titanium, zirconium, aluminium, calcium or magnesium.

17. A process according to claim 15 characterised in that the particles are further coated with a polyol, an alkanolamine, an organic acid or an organic silicon compound.

## Patentansprüche

1. Verfahren zum Beschichten anorganischer Teilchen, umfassend das Bilden einer wäßrigen Suspension der Teilchen und das Ablagern einer Beschichtung aus dichtem amorphem Siliciumoxid auf den Teilchen durch die Zugabe einer Säure zu einer Lösung eines Silikats bei einem pH-Wert von 8 bis 11, wobei der pH-Wert der Suspension während der Zugabe im Bereich von 8 bis 11 gehalten wird,
dadurch gekennzeichnet,
daß die Teilchensuspension während mindestens einem Teil der Ablagerung der Beschichtung aus dichtem amorphem Siliciumoxid den Wirkungen von Ultraschallschwingungen ausgesetzt wird.

2. Verfahren nach Anspruch 1,
dadurch gekennzeichnet,
daß die anorganischen Teilchen Titandioxidpigmentteilchen sind.

3. Verfahren nach Anspruch 2,
dadurch gekennzeichnet,
daß die Titandioxidteilchen mit einem anorganischen Oxid oder wasserhaltigen Oxid beschichtet sind.

4. Verfahren nach Anspruch 2 oder 3,
dadurch gekennzeichnet,
daß das Titandioxid eine mittlere Kristallgröße im Bereich von 0,15 bis 0,40 Mikrometer aufweist.

5. Verfahren nach einem der vorhergehenden Ansprüche,
dadurch gekennzeichnet,
daß das Silikat ein Silikat eines Alkalimetalls ist.

6. Verfahren nach einem der vorhergehenden Ansprüche,
dadurch gekennzeichnet,
daß die Suspension von anorganischen Teilchen gebildet wird, indem ein Gemisch von Wasser und anorganischen Teilchen den Wirkungen von Ultraschall ausgesetzt wird.

7. Verfahren nach einem der vorhergehenden Ansprüche,
dadurch gekennzeichnet,
daß der Suspension von anorganischen Teilchen ein Dispergiermittel zugegeben wird.

8. Verfahren nach einem der vorhergehenden Ansprüche,
dadurch gekennzeichnet,
daß die anorganischen Teilchen Teilchen aus Titandioxidpigment sind, und die Teilchen in der Suspension in einer Konzentration zwischen 150 und 650 Gramm pro Liter vorhanden sind.

9. Verfahren nach einem der vorhergehenden Ansprüche,
dadurch gekennzeichnet,
daß die Säure und die Lösung eines Silikats der Suspension von anorganischen Teilchen gleichzeitig zugegeben werden.

10. Verfahren nach einem der vorhergehenden Ansprüche,
dadurch gekennzeichnet,
daß während der Zugabe der Säure zu der Lösung eines Silikats die Suspension bei einer Temperatur im Bereich von 60°C bis 80°C gehalten wird.

11. Verfahren nach einem der vorhergehenden Ansprüche,
dadurch gekennzeichnet,
daß die Ultraschallschwingungen eine Frequenz im Bereich von 20 kHz bis 100 kHz haben.

12. Verfahren nach einem der vorhergehenden Ansprüche,
dadurch gekennzeichnet,
daß die Ultraschallschwingungen eine Leistungsabgabe an die Suspension im Bereich von 50 bis 3000 Watt haben.

13. Verfahren nach einem der vorhergehenden Ansprüche,
dadurch gekennzeichnet,
daß die anorganischen Teilchen Titandioxidteilchen sind und dichtes amorphes Siliciumoxid in einer Menge von bis zu 12 Gew.-%, ausgedrückt als SiO₂, bezogen auf TiO₂, auf den Teilchen abgelagert wird.

14. Verfahren nach einem der vorhergehenden Ansprüche,
dadurch gekennzeichnet,
daß die Suspension von anorganischen Teilchen, nachdem die Zugabe von Säure zur Lösung eines Silikats abgeschlossen ist, für einen Zeitraum bei einem pH-Wert von 8 bis 11 gerührt wird.

15. Verfahren nach einem der vorhergehenden Ansprüche,
dadurch gekennzeichnet,
daß die anorganischen Teilchen zusätzlich mit einer Beschichtung über der Beschichtung aus dichtem amorphem Siliciumoxid beschichtet werden.

16. Verfahren nach Anspruch 15,
dadurch gekennzeichnet,
daß die Teilchen zusätzlich mit einem Oxid oder wasserhaltigen Oxid von Silicium, Titan, Zirkonium, Aluminium, Calcium oder Magnesium beschichtet werden.

17. Verfahren nach Anspruch 15,
dadurch gekennzeichnet,
daß die Teilchen zusätzlich mit einem Polyol, einem Alkanolamin, einer organischen Säure oder einer organischen Siliciumverbindung beschichtet werden.

## Revendications

1. Procédé de revêtement de particules inorganiques consistant à former une suspension aqueuse des particules et à déposer un revêtement de silice amorphe dense sur lesdites particules par l'addition d'un acide à une solution d'un silicate à une valeur de pH de 8 à 11, le pH de la suspension étant maintenu dans l'intervalle de 8 à 11 tout au long de l'addition, caractérisé en ce que la suspension de particules est soumise aux effets de vibrations ultrasoniques pendant au moins une partie de la déposition du revêtement de silice amorphe dense.

2. Procédé selon la revendication 1, caractérisé en ce que les particules inorganiques sont des particules de pigment de dioxyde de titane.

3. Procédé selon la revendication 2, caractérisé en ce que les particules de dioxyde de titane sont revêtues d'un oxyde inorganique ou d'un oxyde hydraté.

4. Procédé selon la revendication 2 ou 3, caractérisé en ce que le dioxyde de titane présente une taille moyenne de cristaux dans l'intervalle de 0,15 à 0,40 µm.

5. Procédé selon l'une quelconque des revendications précédentes, caractérisé en ce que le silicate est un silicate d'un métal alcalin.

6. Procédé selon l'une quelconque des revendications précédentes, caractérisé en ce que la suspension de particules inorganiques est formée en soumettant un mélange d'eau et de particules inorganiques aux effets d'ultrasons.

7. Procédé selon l'une quelconque des revendications précédentes, caractérisé en ce qu'on ajoute un agent dispersant à la suspension de particules inorganiques.

8. Procédé selon l'une quelconque des revendications précédentes, caractérisé en ce que les particules inorganiques sont des particules de dioxyde de titane pigmentaire et les particules sont présentes dans la suspension dans une concentration comprise entre 150 et 650 g/l.

9. Procédé selon l'une quelconque des revendications précédentes, caractérisé en ce qu'on ajoute simultanément à la suspension de particules inorganiques l'acide et la solution d'un silicate.

10. Procédé selon l'une quelconque des revendications précédentes, caractérisé en ce qu'on maintient la suspension à une température dans l'intervalle de 60°C à 80°C pendant l'addition de l'acide à la solution d'un silicate.

11. Procédé selon l'une quelconque des revendications précédentes, caractérisé en ce que les vibrations ultrasoniques présentent une fréquence dans l'intervalle de 20 kHz à 100 kHz.

12. Procédé selon l'une quelconque des revendications précédentes, caractérisé en ce que les vibrations ultrasoniques présentent une puissance débitée à la suspension dans l'intervalle de 50 à 3 000 W.

13. Procédé selon l'une quelconque des revendications précédentes, caractérisé en ce que les particules inorganiques sont des particules de dioxyde de titane et de la silice amorphe dense est déposée sur les particules dans une quantité allant jusqu'à 12 % en poids exprimée en tant que SiO₂ par rapport à TiO₂.

14. Procédé selon l'une quelconque des revendications précédentes, caractérisé en ce qu'on agite la suspension de particules inorganiques à un pH de 8 à 11 sur une période après que l'addition de l'acide à la solution d'un silicate est terminée.

15. Procédé selon l'une quelconque des revendications précédentes, caractérisé en ce que les particules inorganiques sont encore revêtues d'un revêtement externe au revêtement de silice amorphe dense.

16. Procédé selon la revendication 15, caractérisé en ce que les particules sont encore revêtues d'un oxyde ou d'un oxyde hydraté de silicium, de titane, de zirconium, d'aluminium, de calcium ou de magnésium.

17. Procédé selon la revendication 15, caractérisé en ce que les particules sont encore revêtues d'un polyol, d'une alcanolamine, d'un acide organique ou d'un composé organique du silicium.
